(19) Europäisches Patentamt / European Patent Office / Office européen des brevets

(11) **EP 2 626 998 B1**

(12) **EUROPÄISCHE PATENTSCHRIFT**

(45) Veröffentlichungstag und Bekanntmachung des Hinweises auf die Patenterteilung:
**18.06.2014   Patentblatt 2014/25**

(51) Int Cl.:
*H02P 21/00* *(2006.01)*      *H02P 21/13* *(2006.01)*
*H02P 23/14* *(2006.01)*

(21) Anmeldenummer: **12154860.6**

(22) Anmeldetag: **10.02.2012**

(54) **Stromregelung für eine elektrische Maschine und zugehöriges Regelverfahren**

Current control for an electric machine and corresponding control method

Régulation de courant électrique pour une machine électrique et procédé de réglage correspondant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.08.2013   Patentblatt 2013/33**

(73) Patentinhaber: **Siemens Aktiengesellschaft 80333 München (DE)**

(72) Erfinder: **Künzel, Stefan 91056 Erlangen (DE)**

(56) Entgegenhaltungen:
**EP-A2- 0 790 701      DE-A1- 3 729 932
DE-A1- 10 336 068      DE-A1- 19 505 506
DE-A1-102008 007 100**

**Beschreibung**

Die Erfindung betrifft eine Stromregeleinrichtung für eine elektrische Maschine, durch welche ein Strom in der elektrischen Maschine geregelt wird, also bei einer Drehfeldmaschine beispielsweise ein momentenbildender Anteil eines Drehstroms. Eine Stromregelung der genannten Art ist beispielsweise der von dem Unternehmen SIEMENS AG unter dem Produktnamen "SINAMICS" angebotenen Antriebsregelung. Bei einer Stromregelung ist ein Sollwert für den Strom an einem Sollwerteingang vorgebbar. Zu dem Sollwert wird dann durch eine Reglereinrichtung der Stromregelung ein Regelsignal an einem Stellausgang erzeugt, über welchen eine Stellgröße der elektrischen Maschine eingestellt wird. Zu der Erfindung gehört auch ein entsprechendes Verfahren zum Regeln des Stromes mittels einer Stromregeleinrichtung und ein Computerprogrammprodukt, durch welches das Regelverfahren mittels einer Prozessoreinrichtung einer Antriebsregelung durchführbar ist.

Eine Antriebsregelung erzeugt an ihrem Stellausgang Stellsignale zum Steuern eines Stromrichters oder Wechselrichters, um in Spulen der elektrischen Maschine einen Stromfluss hervorzurufen. Im Zusammenhang mit Drehfeldmaschinen wird hierbei durch abwechselndes Bestromen der Spulen, beispielsweise in einem Stator, ein Drehfeld in der elektrischen Maschine erzeugt, dem dann der Rotor der Maschine folgt. Das hierbei auf den Rotor wirkende Drehmoment ist abhängig von dem sog. momentenbildenden Anteil des Spulenstroms. Durch die Antriebsregelung kann als eine einzuregelnde Betriebsgröße das Drehmoment, die Drehzahl des Rotors oder auch unmittelbar der momentenbildende Anteil des Stromes auf einen entsprechenden Sollwert eingeregelt werden. Die Antriebsregelung kann auch mehrere Regler aufweisen, die dann z.B. als eine Reglerkaskade zusammenwirken.

Bei der Regelung für Drehfeldmotoren wird üblicherweise das Verfahren der Feldorientierung verwendet, das auch als Vektorregelung oder als feldorientierte Regelung bezeichnet wird. Eine Regelung hat im Gegensatz zu einer Steuerung den Vorteil, dass unbekannte oder nur schwer modellierbare Störgrößen, wie etwa Reibung, nicht explizit für die Regelung nachgebildet werden müssen. Durch den steten Abgleich mit dem Istwert der zu regelnden Betriebsgröße ist eine Regelung in der Lage, die elektrische Maschine auf den vorgegebenen Sollwert einzuregeln und hierbei den Einfluss auch der unbekannten Störgrößen selbständig zu kompensieren. Nachteilig bei der Verwendung einer Regelung ist allerdings, dass sie verzögert auf eine Veränderung der Sollwertvorgabe bzw. eine Veränderung des Lastmoments reagiert. Grund dafür ist, dass die Messeinrichtung zum Ermitteln des Istwerts oftmals auf den Istwert der zu regelnden Größe über eine Integralbildung aus einer anderen Messgröße schließen muss, wodurch sich bei einer digitalen Regelung zwingend eine Verzögerung um z.B. einen Abtastwert ergibt. Des Weiteren neigt eine hochdynamische Regelung zum Überschwingen beim Einregeln der Betriebsgröße. Um dies zu vermeiden kann die Regelung nur in der Weise betrieben werden, dass sie den Istwert über mehrere Takte hinweg allmählich auf den Sollwert einregelt. Mit anderen Worten muss die Bandbreite der Regelung im Führungsverhalten begrenzt werden.

Um die Bandbreite im Führungsverhalten einer Regelung zu vergrößern, d. h. nach einem Sollwertsprung die Zeitdauer zum Einregeln einer Betriebgröße zu verringern, ist allgemein die Verwendung einer sog. Vorsteuerung bekannt. Eine Vorsteuerung empfängt, wie auch die Regeleinrichtung, den Sollwert und steuert die Stellgröße der elektrischen Maschine ohne eine Rückkopplung direkt auf den Wert, der zum Erreichen des neuen Sollwerts nötig ist. Allerdings funktioniert eine derartige Vorsteuerung nur gut, wenn das erzeugte Stellsignal nicht begrenzt werden muss.

Elektrische Maschinen werden aber in der Regel an einem elektrischen Versorgungsnetz über einen Frequenzumrichter betrieben. Die der elektrischen Maschine zuführbare elektrische Spannung ist hierbei unter anderem durch den Zwischenkreis begrenzt. Um mittels einer Stromregelung eine schnelle Drehzahländerung bei der elektrischen Maschine zu erreichen oder auf einen großen Lastsprung mit einer abrupten Änderung des Drehmoments reagieren zu können, also ein schnelles Führungsverhalten der Stromregelung zu erzielen, ist es in der Regel nötig, der elektrischen Maschine aus dem Zwischenkreis, oder allgemein der elektrischen Leistungsversorgung, eine Wechselspannung mit einer sehr großen Amplitude zuzuführen. Dies sorgt dann dafür, dass sich der Strom in der elektrischen Maschine schnell genug ändert, um der Änderung der Drehzahl bzw. des Drehmoments zu entsprechen.

Soll diese schnelle Stromänderung durch eine Stromregelung mit einer Vorsteuerung erreicht werden und reicht aber die tatsächlich verfügbare Spannung des Zwischenkreises nicht aus, um die von der Vorsteuerung eingestellte Stellgröße tatsächlich zu realisieren, so wirkt diese Spannungsbegrenzung als die erwähnte Begrenzung des Stellsignals. Hierdurch verschlechtert sich dann das Führungsverhalten der Stromregelung deutlich. Der entstehende Steuerungsfehler muss nämlich vom Regler ausgeregelt werden. Dieser kann aber nur verzögert reagieren, da er während der Vorsteuerung nicht auf die Sollwertänderung reagieren darf. Insgesamt kann das Führungsverhalten der Antriebsregelung hierdurch schlechter sein als es sich bei einer Verwendung eines Reglers allein, d.h. ohne eine Vorsteuerung, ergeben würde.

Ein weiteres Problem bei der Verwendung einer Vorsteuerung mit sehr großer Bandbreite im Führungsverhalten ergibt sich, wenn diese durch ein digitales System realisiert ist, dessen Abtastrate sehr groß ist - insbesondere, wenn die Abtastperioden kleiner als 250 Mikrosekunden sind. Dann sind nach einer schnellen, durch die Vorsteuerung bewirkten Stromänderung transiente Effekte, wie etwa das Abklingen von Wirbelströmen in der elektrischen Maschine, über viele Abtastzyklen hinweg in den Messwerten des Stromreglers sichtbar. Hierzu hat man beobachtet, dass dies den präzisen und schnellen Stromaufbau stört. Denn bei richtiger Vorsteuerung wird der gewünschte Stromistwert zwar erreicht; er fällt aber anschließend wieder ab.

In dem Dokument DE 10 2008 007 190 A1 sind eine Vorrichtung sowie ein Verfahren zur Stromregelung oder Momentenregelung einer Synchronmaschine beschrieben, bei welchen Stromreglern Vorsteuerungen parallel geschaltet sein können. Es können mehrere Vorsteuerungen parallel geschaltet werden, um Oberschwingungen unterschiedlicher Ordnung gleichzeitig zu kompensieren. Parallel zu den jeweiligen Stromreglern können auch drehzahlabhängig nachgeführte Störgrößenkompensationsfilter geschaltet sein.

In dem Dokument EP 0 790 701 A2 ist eine Regelung für eine elektrische Maschine beschrieben. Mittels eines Models wird ein Verdrängungseffekt (skin effect) vorhergesagt. Mittels der berechneten Verdrängungseffekte wird eine Schätzung einer Schlupffrequenz in einer Schlupfberechnungseinheit korrigiert, um auf Grundlage des so genauer berechneten Schlupfes eine Koordinatentransformation genauer betreiben zu können.

In dem Dokument DE 103 36 068 A1 ist eine Vorsteuerung für eine elektrische Traktionsmaschine einer Lokomotive beschrieben. Zur Erreichung einer stationär und dynamisch richtigen Vorsteuerung wird diese in einen zeitdiskreten, pulssynchronen Steuersatz verlagert, dessen Eingangsgröße nicht mehr die Ständerspannung, sondern ihr Integral über der Zeit, also eine Spannungszeitfläche, ist.

Eine der Erfindung zugrunde liegende Aufgabe besteht darin, das Führungsverhalten einer Antriebsregelung einer elektrischen Maschine zu verbessern.

Die Aufgabe wird durch ein Verfahren zur Stromregelung einer elektrischen Maschine gemäß Patentanspruch 1, eine Stromreglervorrichtung gemäß Patentanspruch 8 sowie ein Computerprogrammprodukt gemäß Patentanspruch 13 gelöst. Vorteilhafte Weiterbildungen des Verfahrens sind durch die Unteransprüche gegeben.

Durch das erfindungsgemäße Verfahren wird ein Strom in Wicklungen einer elektrischen Maschine geregelt, insbesondere ein momentenbildender Anteil des Stroms im Zusammenhang mit einer feldorientierten Regelung. Die zugehörige Stellgröße, die durch das Verfahren in diesem Fall eingestellt wird, ist dann die q-Komponente einer Steuerspannung, die als komplexer Raumzeiger definiert ist. Bei dem Verfahren wird hierbei vermieden, dass transiente Effekte in der elektrischen Maschine, also das bereits erwähnte Abklingen von Wirbelströmen und auch Stromverdrängungseffekte, wie sie eine schnelle Stromänderung in der elektrischen Maschine hervorruft, im nachhinein von einer Reglereinrichtung der Stromreglers ausgeglichen werden müssen. Das Verfahren realisiert die Vorsteuerung, indem von dem Stromregler an einem Sollwerteingang ein Sollwert für den Strom empfangen und zu dem Sollwert durch eine Vorsteuerung ein Vorsteuersignal erzeugt wird. Das Vorsteuersignal wird dann aber nicht unmittelbar am Stellausgang des Stromreglers bereitgestellt, über welchen der Stromregler die Stellgröße der elektrischen Maschine, also deren Steuerspannung einstellt. Stattdessen wird aus dem Vorsteuersignal durch Filtern desselben mittels eines Kompensationsfilters ein Stellsignal an dem Stellausgang gebildet. Das Kompensationsfilter bildet hier den Wirbelstrom- und Verdrängungseffekt der elektrischen Maschine in invertierter Weise nach. Mit anderen Worten wird durch das Filtern mittels des Kompensationsfilters das Vorsteuersignal in der Weise verändert, dass es um diejenigen Signalanteile ergänzt wird, die nötig sind, um die durch die Vorsteuerung ausgelösten transienten Effekte gleich mit zu kompensieren. Durch das erfindungsgemäße Verfahren ergibt sich deshalb der Vorteil, dass die Vorsteuerung nach Erreichen des Sollwertes keinen Stromabfall mehr nach sich zieht.

Bei elektrischen Maschinen, die über eine elektrische Leistungsversorgung, wie etwa einen Frequenzumrichter, mit einem Versorgungsnetz gekoppelt sind, besteht das eingangs beschriebene Problem, dass die Vorsteuerung dadurch eine Stellbegrenzung erfahren kann, dass die Leistungsversorgung nicht die für die Vorsteuerung benötigte Spannung bereitstellen kann. Um hierdurch nicht eine unnötig große Verzögerung beim Stellen der elektrischen Maschine zu verursachen, sieht die Erfindung vor, durch eine Schätzeinrichtung des Stromreglers einen sich in der elektrischen Maschine ergebenen Istwert des Stromes zu schätzen. Dieser geschätzte Istwert wird durch die Vorsteuereinrichtung berücksichtigt, indem das Vorsteuersignal nicht unmittelbar aus dem Sollwert selbst, sondern aus der Differenz zwischen dem Sollwert und dem geschätzten Istwert erzeugt wird. Wird durch die Vorsteuereinrichtung nicht innerhalb eines Taktzyklus des Digital-Analog-Wandlers, welcher das Stellsignal in die analoge Stellgröße für die elektrische Maschine wandelt, der gewünschte Sollwert erreicht, so wird dies durch die Schätzeinrichtung erkannt und in dem geschätzten Ist-Wert widergespiegelt. Anhand der sich ergebenden Differenz zwischen dem Sollwert und dem geschätzten Istwert kann dann für einen drauffolgenden Taktzyklus durch die Vorsteuerung ein weiterer Vorsteuerwert für das Vorsteuersignal erzeugt, um den noch fehlenden Anteil des einzuregelnden Stromwerts ebenfalls durch die Vorsteuerung einzustellen.

Das Kompensationsfilter umfasst bevorzugt eine Übertragungsfunktion, die in Abhängigkeit von einem Wert für einen Widerstand und eine Induktivität der elektrischen Maschine gebildet ist. Hierdurch ergibt sich der Vorteil, dass in einfacher Weise ein Maß für die Auswirkung des Stromverdrängungseffekts und der Wirbelstromeffekte angegeben werden kann. Diese einfach ermittelbaren Werte ermöglicht es, für viele Anwendungen die Auswirkung dieser transienten Effekte hinreichend genau vorherzusagen. Die Übertragungsfunktion kann auch ein noch genaueres Modell umfassen, das auf der Grundlage von sog. Kettenleitern gebildet ist.

Bei einer besonders bevorzugten Ausführungsform wird das Vorsteuersignal mittels einer Übertragungsfunktion gefiltert, welche durch Invertieren einer Übertragungsfunktion gebildet ist, wie sie eine Parallelschaltung aus einer Induktivität und einem ohmschen Widerstand aufweist. Diese Weiterbildung beruht auf der Erkenntnis, dass Wirbelstrom- und Stromverdrängungseffekte sich durch die genannte Parallelschaltung hinreichend genau modellieren lassen.

Wie bereits erwähnt gehört zu der Erfindung auch eine Stromreglervorrichtung. Diese weist den Vorteil auf, dass sich mit ihr eine Stromregelung gemäß den erfindungsgemäßen Verfahren durchführen lässt. Hierzu weist die Stromreglervorrichtung eine Prozessoreinrichtung, also beispielsweise einen Mikrocontroller oder ein ASIC (application specific integrated circuit) oder ein FPGA (field programmable gate array) auf. Diese Prozessoreinrichtung ist dabei dazu eingerichtet, eine Ausführungsform des erfindungsgemäßen Verfahrens durchzuführen.

Das Verfahren eignet sich aber auch dazu, in eine bereits in einer Fabrikanlage oder dergleichen installierten Antriebsregelung implementiert zu werden. In diesem Zusammenhang umfasst die Erfindung einen hier als Computerprogrammprodukt bezeichneten Speicher aus einem oder mehreren Speichermedien, wobei auf einem oder mehreren dieser Speichermedien ein Programm gespeichert ist, welches dazu eingerichtet ist, bei Ausführung durch einen vorbestimmten Typ von Prozessoreinrichtung die Durchführung einer Ausführungsform des erfindungsgemäßen Verfahrens zu bewirken.

Die im Folgenden im Zusammenhang mit dem erfindungsgemäßen Verfahren beschriebenen Weiterbildungen gelten somit entsprechend auch für die erfindungsgemäße Stromreglervorrichtung und das erfindungsgemäße Computerprogrammprodukt.

Bevorzugt weist die besagte Schätzeinrichtung ein Modell auf, welches ein elektrisches Verhalten der elektrischen Maschine und einer elektrischen Leistungsversorgung der elektrischen Maschine nachbildet, sodass insbesondere eine Begrenzung der Vorsteuerung durch die begrenzte Zwischenkreisspannung erkennbar und vorhersagbar wird. Das Modell kann beispielsweise eine Kennlinie oder ein mathematisches Modell umfassen, die beide auf der Grundlage von mathematischen

Modellen zu elektrischen Maschinen hergeleitet werden können und die eine sehr präzise Voraussage eines Istwerts ermöglichen.

In Bezug auf die Reglereinrichtung, welche natürlich ebenfalls Bestandteil eines Stromreglers ist, ergibt sich ein Vorteil, wenn die Reglereinrichtung stets dann nicht ebenfalls auf die Sollwertänderung reagiert, wenn das Stellsignal durch die Vorsteuereinrichtung erzeugt wird. Um eine Reaktion der Reglereinrichtung auf einen Sollwertsprung während des Vorsteuerns automatisch zu verhindern, sieht die Erfindung vor, der Reglereinrichtung als den Regel-Sollwert nicht den am Sollwerteingang empfangenen Sollwert, sondern den geschätzten Ist-Wert zuzuführen.

Ganz besonders vorteilhaft ist es hierbei, wenn der Reglereinrichtung der Regler-Sollwert, d. h. der geschätzte Istwert, über ein Totzeitglied zugeführt wird, welches den geschätzten Istwert um eine vorbestimmte Messzeitverzögerung und/oder eine vorbestimmte Stellzeitverzögerung verzögert. Mit Messzeit ist hierbei diejenige Zeitdauer gemeint, die von der Messeinrichtung des Reglers benötigt wird, um einen tatsächlichen Istwert an der elektrischen Maschine zu erfassen. Die Stellzeit ist diejenige Zeitdauer, die benötigt wird, um einen am Stellausgang der Antriebsreglervorrichtung erzeugten Stellwert (sei es ein Vorsteuerwert oder ein Regelwert) in eine wirksame, analoge Stellgröße der elektrischen Maschine umzuwandeln. Durch das Totzeitglied wird erreicht, dass an der Reglereinrichtung der Regler-Sollwert zum selben Zeitpunkt eintrifft, wie die gemessenen Istwerte zum Bilden des Regelwerts. Bei der Reglereinrichtung stimmen also bei erfolgreicher Vorsteuerung der Regler-Sollwert und der Istwert überein, so dass die Reglereinrichtung von selbst während der Vorsteuerung nicht auf einen geänderten Sollwert reagiert.

Für den Fall, dass die Vorsteuereinrichtung zum Stellen eines bestimmten Sollwerts ein Vorsteuersignal erzeugen muss, dass die vom Zwischenkreis bereitstellbare Steuerspannung bei Weitem überschreitet, kann es günstiger sein, die Vorsteuerung nicht zu verwenden und stattdessen gleich über die Reglereinrichtung den Sollwert einregeln zu lassen. Hierzu sieht eine Ausführungsform der Erfindung vor, durch eine Überwachungseinrichtung zu überprüfen, ob eine Differenz einer über den Stellausgang eingestellten Steuerspannung und einem von der Leistungsversorgung der elektrischen Maschine momentan tatsächlich bereitstellbaren Wert für die Steuerspannung betragsmäßig größer als ein vorbestimmter Höchstwert ist. Ist dies der Fall, so wird nun der Sollwert, wie er am Sollwerteingang der Stromreglereinrichtung empfangen wird, unverzögert an den Regler-Sollwerteingang weitergeleitet. Mit anderen Worten wird sowohl die Vorsteuerung überbrückt als auch ein eventuell vorhandenes Totzeitglied umgangen.

Eine weitere Verbesserung einer Stromregelung mit Vorsteuerung ergibt sich, wenn eine stromabhängige Induktivitätsänderung berücksichtigt wird. Da Stromistwerte aufgrund der Messverzögerung aber stets verzögert vorliegen, und die Steuerspannung, d. h. die Stellgröße der elektrischen Maschine, erst bei Abschluss des nächsten Taktzyklus des Digital-Analogwandlers in der Maschine wirksam werden, muss der die Induktivität beeinflussende Strom im Voraus prädiziert werden. Zweckmäßigerweise wird deshalb der stromabhängige Induktivitätswert auf der Grundlage eines Stromwerts berechnet, welcher durch einen Prädiktor, wie er z.B. aus der statistischen Schätztheorie bekannt ist, oder mittels eines Modells für ein elektrisches Verhalten der elektrischen Maschine vorausberechnet ist. Ein solches Modell kann im einfachsten Fall aus einem Integrator bestehen, welcher zu dem beim nächsten Taktzyklus wirksamen Wert der Steuerspannung den sich hieraus ergebenden Strom in der elektrischen Maschine durch Integration berechnet.

Im Folgenden wird die Erfindung anhand eines konkreten Ausführungsbeispiels noch einmal näher erläutert. Dazu zeigt:

FIG 1    ein schematisiertes Blockschaltbild einer bevorzugten Ausführungsform der erfindungsgemäßen Stromreglervorrichtung,

FIG 2    ein Diagramm, welches einen zeitlichen Verlauf einer q-Komponente eines Stromes einer elektrischen Maschine zeigt, wie er sich bei Verwendung der Stromreglervorrichtung von FIG 1 ergibt,

FIG 3    ein Ersatzschaltbild, wie es für die Bildung eines Kompensationsfilters der Stromreglervorrichtung von FIG 1 zugrunde gelegt werden kann.

Bei dem im Folgenden erläuterten Beispiel stellen die hier in Kombination beschriebenen Komponenten der Antriebsregelung jeweils einzelne, unabhängig voneinander zu betrachtende Merkmale der Antriebsregelung dar, welche die Antriebsregelung jeweils auch unabhängig voneinander weiterbilden und damit auch einzeln oder in einer anderen als der gezeigten Kombination als Bestandteil der Erfindung anzusehen sind.

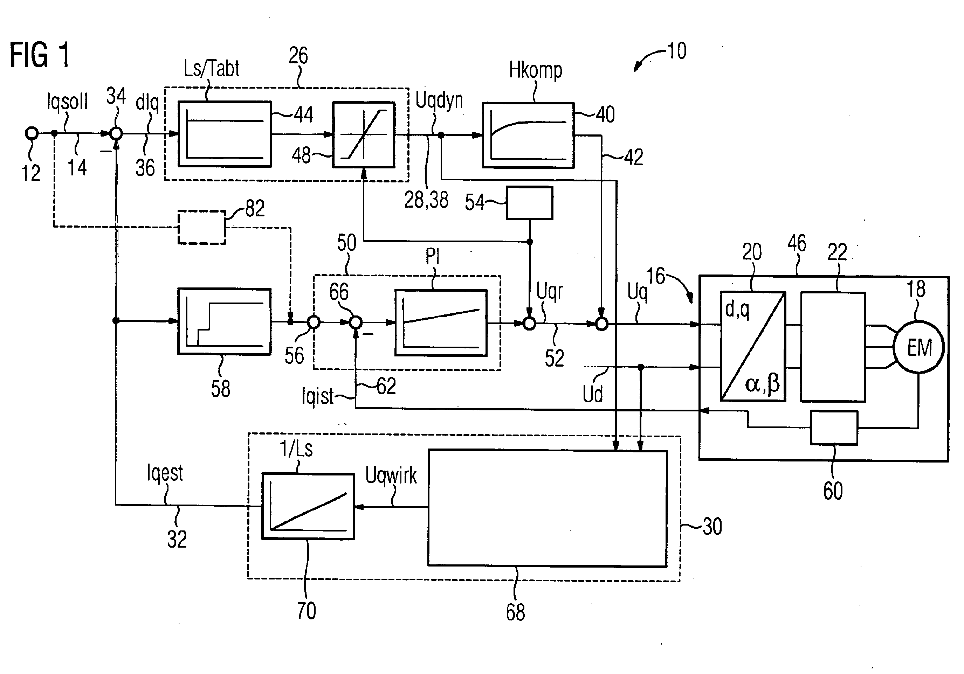

In FIG 1 ist ein Stromregler 10 gezeigt, der an einem Sollwert-Eingang 12 ein Sollwert-Signal Iqsoll empfangen kann, das im gezeigten Beispiel aus einzelnen digitalen Sollwerten 14 gebildet ist. Die Sollwerte 14 können beispielsweise von einem (nicht dargestellten) Drehzahlregler oder Momentenregler einer Reglerkaskade erzeugt werden. Der Stromregler 10 erzeugt in Abhängigkeit von den Sollwerten 14 an einem Stellausgang 16 digitale Werte für eine q-Komponente Uq und eine d-Komponente Ud einer komplexen Spannung U, d.h. einen Raumzeiger. Die komplexe Spannung U stellt eine Stellgröße für eine feldorientierte Regelung einer elektrischen Maschine 18 dar. Dem Stellausgang 16 ist eine Transformationseinrichtung 20 nachgeschaltet, welche aus der komplexen Spannung U eine reellwertige Stellgröße für einen Steuersatz 22 eines Stromrichters oder Wechselrichters erzeugt. Der Steuersatz 22 führt der elektrischen Maschine 18 in Abhängigkeit von der Stellgröße eine Steuerspannung zu, die in der elektrischen Maschine 18 einen Drehstrom hervorruft. Der Steuersatz 22 wird hierfür aus einem (nicht dargestellten) Zwischenkreis eines Frequenzumrichters mit elektrischer Energie versorgt wird. Die einzelnen Komponenten des Stromreglers 10 können in der in FIG 1 dargestellten Weise miteinander verknüpft sein.

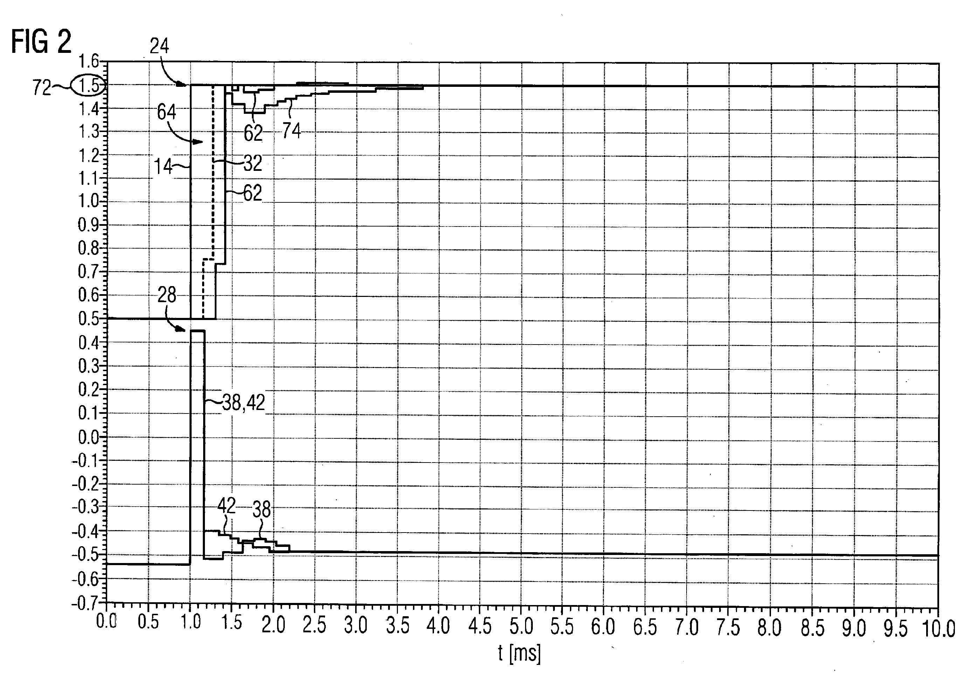

Im Folgenden ist anhand von FIG 1 und FIG 2 die Funktionsweise des Stromreglers 10 erläutert. In FIG 2 ist hierzu die Folge der Sollwerte 14 über der Zeit t aufgetragen, sodass sich der zeitliche Verlauf des Sollwertsignals Iqsoll ergibt. Wie der stufige Verlauf der Zeitverläufe in FIG 2 zeigt, weist das digitale System des Stromreglers 10 eine Taktung auf, deren Taktdauer in diesem Beispiel 125 Mikrosekunden beträgt.

Für die Beschreibung der Funktionsweise sei hier angenommen, dass sich die Sollwerte 14 zum Zeitpunkt t = 1 Mikrosekunde sprunghaft ändern, sodass ein Sollwertsprung 24 am SollwertEingang 12 von des Stromreglers 12 beobachtet wird. Eine dynamische Spannungsvorsteuerung 26 erzeugt hierauf unmittelbar einen Vorsteuerwert 28, der als Bestandteil eines Vorsteuersignals Uqdyn ausgegeben wird.

Zusätzlich berechnet zu dem Vorsteuerwert 28 eine Schätzeinrichtung 30 ein Schätzsignal Iqest aus geschätzten Istwerten 32. Der zu dem Vorsteuerwert 28 berechnete Istwert wird ca. eine halbe Abtastdauer nach Empfang des Vorsteuerwerts 28 ausgegeben, wodurch angezeigt wird, dass es sich hierbei um die Schätzung desjenigen Istwerts handelt, den die q-Komponente des Stroms in der elektrischen Maschine 18 einen halben Takt nach der Beaufschlagung mit der durch den Vorsteuerwert 28 eingestellten Stellgröße eingenommen hat. Grund für die Verzögerung um eine halbe Abtastzeit ist, dass ein (nicht dargestellter) Digital-Analogwandler, welcher sich zwischen der Transformation 20 und dem Steuersatz 22 beifndet, die empfangenen digitalen Stellwerte mit einer doppelten Taktrate in das analoge Stellsignal wandelt als ein Analog-Digitalwandler analoge Eingangswerte dem Stromregler 10 zuführt.

Die geschätzten Istwerte 32 werden von den Sollwerten 14 durch einen Subtrahierer 34 voneinander subtrahiert, woraus Differenzwerte 36 eines Differenzsignals dIq erzeugt werden. Die Differenzwerte 36 bilden die Eingangswerte der Spannungsvorsteuerung 26. Aus den Differenzwerten 36 berechnet die Spannungsvorsteuerung 26 noch weitere Vorsteuerwerte 38.

Die Vorsteuerung 26 ist über ein Kompensationsfilter 40 mit dem Stellausgang 16 gekoppelt. Das Vorsteuersignal Uqdyn, das aus dem Vorsteuerwert 28 und den weiteren Vorsteuerwerten 38 besteht, wird durch das Kompensationsfilter 40 gefiltert, wodurch ein gefiltertes Vorsteuersignal 42 erzeugt wird. Das gefilterte Vorsteuersignal 42 bildet einen Anteil der Komponente Uq am Stellausgang 16.

Der Vorsteuerwert 28 und die weiteren Vorsteuerwerte 38 werden auf der Grundlage eines Modells 44 der Vorsteuerung 26 berechnet, das nur die Energiespeicher der sich insgesamt ergebenden Regelstrecke 46 nachbildet, also keine Mess- oder Stellverzögerungen. Der wesentliche Energiespeicher ist hier durch die bei der feldorientierten Regelung wirksamen Streuinduktivität Ls der Spulen der elektrischen Maschine 18 gebildet. Das Stellsignal Uqdyn wird hierbei gemäß der folgenden Gleichung berechnet:

$$Uqdyn = Ls * dIq / Tabt,$$

wobei Tabt die Zeitdauer eines Zeittakts des digitalen Systems (Abtastdauer des Digital-Analogwandlers) angibt. Der Vorsteuerwert des Modells 44 wird noch durch einen Begrenzer 48 begrenzt, wodurch vermieden wird, das Komponenten der Regelstrecke 46 an ihre mechanische oder elektrische Grenze gesteuert und hierdurch beschädigt werden.

Der Stromregler 10 weist neben der Spannungsvorsteuerung 26 einen Regler 50 auf, der beispielsweise ein PI-Regler sein kann. Der Regler 50 erzeugt Regelwerte 52 am Stellausgang 16, durch die ebenfalls die q-Komponente Uq gebildet ist. Insgesamt ergibt sich durch die Regelwerte 52 das Reglersignal Uqr. Der Stromregler 10 kann zusätzlich auch eine stationäre Spannungsvorsteuerung 54 aufweisen, über welche derjenige Anteil der q-Komponente Uq eingestellt werden kann, der für die Aufrechterhaltung des stationären Betriebs der elektrischen Maschine 18 notwendig ist.

Während der Ausgabe des Vorsteuerwerts 28 ist der Regler 50 dahingehend deaktiviert, dass durch den Regler 50 nicht zeitgleich mit der Spannungsvorsteuerung 26 ein Anteil des Stellsignals Uq verändert wird, um dem Sollwertsprung 24 zu folgen. Hierzu empfängt der Regler 50 einen Regler-Sollwert 56 über ein Totzeitglied 58, welches mit der Schätzeinrichtung 30 verbunden ist. Durch das Totzeitglied 58 werden die geschätzten Istwerte 32 dem Regler 50 als Regler-Sollwert 56 mit einer Verzögerung von in diesem Beispiel anderthalb Taktzyklen (Dauer eines Taktzyklus = 125 Mikrosekunden) zugeführt. Diese Zeitdauer setzt sich aus zwei Größen zusammen. Zum einen benötigt eine Messeinrichtung 60 hier eine Taktdauer an Zeit, um in der elektrischen Maschine 18 eine Veränderung der tatsächlichen Stromstärke (in diesem Fall dessen q-Komponente) zu ermitteln. Die Messwerte 62 der Messeinrichtung 60 bilden zusammen das gemessene Istwertsignal Iqist. Sie sind in FIG 2 ebenfalls dargestellt. Zum anderen ist die Stellzeit berücksichtigt, die hier, wie bereits beschrieben, eine halbe Taktdauer betragen kann.

Der Verlauf der geschätzten Istwerte 32 stimmt mit dem Verlauf der gemessenen Istwerte 62 während des Stromaufbaus 64 nahezu vollständig überein. Durch die Verzögerung mittels des Totzeitglieds 58 werden die geschätzten Istwerte 32 um die Messverzögerung und die Stellverzögerung verzögert, sodass an einem Subtrahierer 66 des Reglers 50 während des Stromanstiegs 64 stets eine Regelabweichung ermittelt wird, die nahezu gleich Null ist. Dies sorgt dafür, dass der Regler 50 nach dem Sollwertsprung 24 unveränderte Regelwerte 52 ausgibt, d. h. keine Reaktion auf den Sollwertsprung 24 zeigt.

Damit durch die Schätzeinrichtung 30 auch eine Stellbegrenzung erkannt und in den geschätzten Istwerten 32 widergespiegelt werden kann, weist die Schätzeinrichtung 30 ein Modell 68 für die Berechnung der tatsächlich wirksamen Spannung Uqwirk auf. Durch das Modell 68 ist die maximal verfügbare Spannung der Leistungsversorgung, also etwa des Zwischenkreises, berücksichtigt. Aus dem Modell 68 wird in Abhängigkeit von einer Schätzung des aktuellen Betriebszustands der elektrischen Maschine 18 und der übrigen Komponenten der Regelstrecke 46 das Signal der sich effektiv ergebenden momentenbildenden Steuerspannung Uqwirk berechnet. Das Modell 68 empfängt hierzu als Eingangswert die Vorsteuerwerte 28, 38. Diese stehen in dem in FIG 1 gezeigten Beispiel direkt zur Verfügung. Stehen sie nicht zur Verfügung, so werden sie berechnet oder geschätzt. Das Modell kann auf einer mathematischen Berechnungsvorschrift für die momentenbildende Steuerspannung Uqwirk oder auf in einem Speicher abgespeicherte Kennlinien beruhen. Beide können anhand von an sich bekannten Methoden hergeleitet werden.

Auf der Grundlage eines nachgeschalteten Modells 70 wird durch die Schätzeinrichtung 30 der Stromaufbau 64 bzw. der Stromabbau in der elektrischen Maschine 18 berechnet. Durch das Modell 70 wird die effektive Steuerspannung Uqwirk zu der sich ergebenden geschätzten q-Komponente des Stroms in der elektrischen Maschine 18 aufintegriert. Für den Fall, dass eine stationäre Spannungsvorsteuerung 54 bereitgestellt ist, braucht das Modell 70 kein PT1-Glied umfassen, da der Spannungsaufbau am Ständerwiderstand nicht mitgeregelt werden muss. Die geschätzte effektive Steuerspannung Uqwirk ist für den Fall, dass die Leistungsfähigkeit der Leistungsversorgung erschöpft ist, kleiner als der gewünschte Spannungswert Uq. Das Modell 70 berücksichtigt den Energiespeicher der Regelstrecke 46, also die Streuinduktivität Ls. Die Mess- und Stellverzögerungen sind aber nicht berücksichtigt, sodass die geschätzten Istwerte 32 vor den gemessenen Istwerten 62 bereitstehen und so durch die dynamischen Spannungsvorsteuerung 26 sehr viel schneller auf die Spannungsbegrenzung reagiert werden kann.

Das Kompensationsfilter 40 verhindert, dass bei den durch die Vorsteuerung 26 erreichten sehr schnellen und sehr großen Änderungen der Stromstärke in der elektrischen Maschine 18 durch Wirbelstrom- und Verdrängungseffekte die Stromstärke nach Erreichen des Sollwerts 72 wieder abfällt. In FIG 2 ist zur Verdeutlichung dieses Phänomens ein Verlauf 74 von gemessenen Istwerten gezeigt, wie er sich ohne die Verwendung des Kompensationsfilters 40 ergeben würde. Durch das Kompensationsfilter 40 werden die weiteren Vorsteuerwerte 38, die nach dem Vorsteuerwert 28 ausgegeben werden, in das gefilterte Signal 42 umgerechnet, welches, wie in FIG 2 im unteren Diagramm gezeigt, das Vorsteuersignal 42 nach der Ausgabe des Vorsteuerwerts 28 im Vergleich zu den Vorsteuerwerten 38 anhebt und dann auf einen Endwert mit einer Zeitkonstante abfällt, die sich aus der Übertragungsfunktion des Kompensationsfilters 40 ergibt.

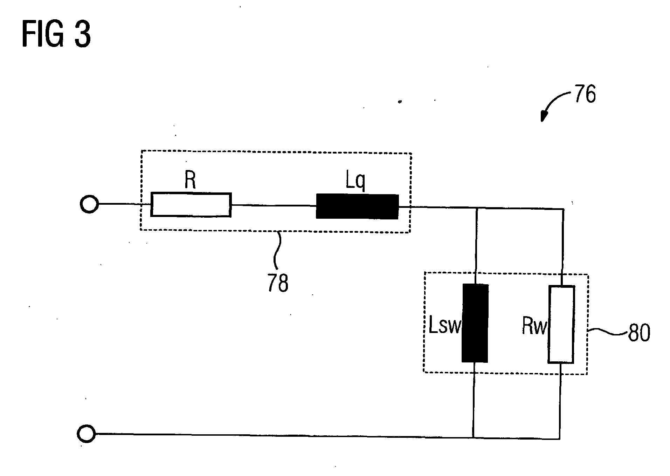

Die Sprungantwort des Kompensationsfilters 40 ist in FIG 1 in schematisierter Form gezeigt. Sie kann auf der Grundlage des in FIG 3 gezeigten elektrischen Modells 76 der elektrischen Maschine 18 für den schnellen Stromaufbau hergeleitet werden. Das Modell 76 umfasst eine Reihenschaltung 78 aus dem Wicklungswiderstand R und der wirksamen Streuinduktivität Ls und in Reihe dazu eine Parallelschaltung 80 aus einem Widerstand Rw und einer Induktivität Lsw. Durch die Parallelschaltung 80 ist die Auswirkung der Wirbelstrom- und Stromverdrängungseffekte modelliert. Die Übertragungsfunktion von Spannung nach Strom, die den Stromaufbau 64 beschreibt, entspricht dann dem Leitwert 1/Z der Schaltung, also des Modells 76:

$$1/Z = 1/(s * Ls) * (s * Tw + 1) / (s * Tw + 1 + Lsw / Ls),$$

wobei s für die Variable der Laplace-Transformation steht und Tw definiert ist als Tw = Lsw / Rw. Wenn man den Spannungsabfall am Widerstand R stationär mittels der stationären Spannungsvorsteuerung 54 vorsteuert, so genügt (wie hier gezeigt) für die dynamische Vorsteuerung die Berücksichtigung der Integration über die Induktivität 1 / (s * Ls). Dieser Wert wird nun gemäß dem Modell 76 mit einer Übertragungsfunktion erster Ordnung verändert. Hierbei hat sich herausgestellt, dass sich diese Übertragungsfunktion invertieren lässt und das Ergebnis der Invertierung wieder ein stabiles System beschreibt. Dies ist nicht selbstverständlich. Die invertierte Übertragungsfunktion kann zur Bildung des Kompensationsfilters 40 genutzt werden, das man (wie in FIG 1 gezeigt) in den Vorsteuerzweig der Stromregelung 10 schalten kann, um die Wirbelstrom- und Stromverdrängungseffekte zu kompensieren. Die invertierte Übertragungsfunktion, d.h. die "invertierten Wirbelstrom- und Stromverdrängungseffekte", bilden die Übertragungsfunktion Hkomp des Kompensationsfilters:

$$Hkomp\ (s) = (s * Tw + 1 + Lsw / Ls) / (s * Tw + 1)$$
$$= 1 + (Lsw / Ls) / (s * Tw + 1).$$

Durch die Verwendung des Kompensationsfilters 40 ergibt sich ein deutlich verbesserter Verlauf der Istwerte 62, wie der Vergleich mit dem Verlauf 74 in FIG 2 zeigt. Die dynamische Vorsteuerung zeigt keinen Stromabfall nach Erreichen des Sollwerts 72. Das Modell 76 ist sehr einfach und beschreibt die transienten Effekte dennoch ausreichend genau. Es kann für eine einfache Kompensation wirkungsvoll eingesetzt werden. Das Modell 76 verkleinert die Fehler des gängigen EMK-Modells (EMK - Elektromotorische Kraft) für den Fall schneller Stromänderungen. Anstelle des Modell 76 kann aber auch ein noch genaueres Modell auf der Grundlage von sog. Kettenleitern gebildet werden, die eine Aneinanderreihung von mehreren R-L-Gliedern umfassen.

Bei dem Stromregler 10 kann zusätzlich eine Überwachungseinrichtung 82 vorgesehen sein, die bei extremer Übersteuerung (Uq >> Uqwirk) die Sollwerte 14 unmittelbar dem Regler-Sollwerteingang als Regler-Sollwert 56 zuführt, sodass der Regler 50 allein, ohne die dynamische Spannungsvorsteuerung 26 und unverzögert auf die Regelstrecke 46 wirkt. Die extreme Übersteuerung wird hierbei durch einen festzulegenden Grenzwert definiert.

In Bezug auf eine bauliche Realisierung der Stromregelung 10 kann das in FIG 1 gezeigte Blockschaltbild beispielsweise in Form von separaten oder integrierten analogen oder digitalen Schaltkreisen realisiert sein. Insbesondere können bei dem Stromregler 10 auch alle oder einige der Einrichtungen durch Programme einer digitalen Prozessoreinheit, z. B. eines Digitalprozessors (DSP), eines Mikrocontrollers, eines ASICs, eines FPGAs (field programmer gate array) oder einer Kombination daraus realisiert sein.

Insgesamt ist durch das Beispiel gezeigt, wie ein Verfahren zur dynamischen Spannungsvorsteuerung für einen Stromregler bereitgestellt werden kann, das auch in der Stellbegrenzung genutzt werden kann, ohne hierbei die Nachteile des Stands der Technik aufzuweisen. Damit kann der Strom in einer elektrischen Maschine zeitoptimal schnell und ohne das für Regler typische Überschwingen auf einen gewünschten Sollwert aufgebaut bzw. abgebaut werden. Es ist möglich, hierbei die maximal mögliche Bandbreite (Shannon-Grenze) im Führungsverhalten des Stromreglers zu erreichen. Durch die beschriebene Kombination von Steuerung und Regelung werden Vorteile beider Verfahren kombiniert. Hierbei werden auch Wirbelstrom- und Stromverdrängungseffekte berücksichtigt.

**Patentansprüche**

1. Verfahren zum Regeln eines Stromes in einer elektrischen Maschine (18) mittels eines Stromreglers (10), indem

   - von dem Stromregler (10) an einem Sollwerteingang (12) ein Sollwert (14) für den Strom empfangen wird und
   - zu dem Sollwert (14) durch eine Vorsteuereinrichtung (26) ein Vorsteuersignal (28, 38) erzeugt wird,

   **dadurch gekennzeichnet, dass**

- durch Filtern des Vorsteuersignals (28, 38) mittels eines Kompensationsfilters (40), welches einen inversen Wirbelstrom- und Stromverdrängungseffekt der elektrischen Maschine (18) nachbildet, an einem Stellausgang (16) ein erstes Stellsignal für eine Stellgröße der elektrischen Maschine (18) erzeugt wird,

- durch die Vorsteuereinrichtung (26) das Vorsteuersignal (28, 38) aus der Differenz (36) zwischen dem Sollwert (14) und einem durch eine Schätzeinrichtung (30) geschätzten Istwert (32) des in der elektrischen Maschine (18) fließenden Stroms erzeugt wird und

- durch eine Reglereinrichtung (50) des Stromreglers (10) ein Regelsignal (52) als ein zweites Stellsignal an dem Stellausgang (16) erzeugt wird und hierbei der Reglereinrichtung (50) als Regel-Sollwert (56) der geschätzte Istwert (32) an einem Regler-Sollwerteingang zugeführt wird.

2. Verfahren nach Anspruch 1, wobei durch die Schätzeinrichtung (30) der geschätzte Istwert (32) in Abhängigkeit von einem Wert einer der elektrischen Maschine (18) durch eine Leistungsversorgung höchstens zuführbaren elektrischen Spannung berechnet wird.

3. Verfahren nach Anspruch 1 oder 2, wobei der Reglereinrichtung (50) der Regler-Sollwert (56) über ein Totzeitglied (58) zugeführt wird und hierdurch der geschätzte Istwert (32) um eine vorbestimmte Messzeitverzögerung und/oder eine vorbestimmte Stellzeitverzögerung verzögert wird.

4. Verfahren nach einem der vorhergehenden Ansprüche, wobei als der Strom ein momentenbildender Anteil eines Spulenstroms der elektrischen Maschine (18) geregelt wird und als Stellgröße durch den Stromregler (10) zumindest eine q-Komponente einer Steuerspannung für einen Raumzeiger einer feldorientierten Regelung eingestellt wird.

5. Verfahren nach einem der vorhergehenden Ansprüche, wobei durch eine Überwachungseinrichtung (82) überprüft wird, ob eine Differenz einer über den Stellausgang (16) eingestellten Steuerspannung und ein von der Leistungsversorgung der elektrischen Maschine (18) momentan tatsächlich bereitstellbarer Wert für die Steuerspannung betragsmäßig größer als ein vorbestimmter Höchstwert ist und für diesen Fall der Sollwert (14) unverzögert an einem Regler-Sollwerteingang einer Reglereinrichtung (50) des Stromreglers (10) als Regler-Sollwert (56) bereitgestellt wird.

6. Verfahren nach einem der vorhergehenden Ansprüche, wobei ein stromabhängiger Induktivitätswert für eine Induktivität von Wicklungen der elektrischen Maschine zumindest für die Vorsteuerung ermittelt wird.

7. Verfahren nach Anspruch 6, wobei der stromabhängig Induktivitätswert auf der Grundlage eines Stromwertes berechnet wird, welcher durch einen Prädiktor oder mittels eines Modells für ein elektrisches Verhalten der elektrischen Maschine vorausberechnet wird.

8. Stromreglervorrichtung (10) zum Regeln eines Stromes einer elektrischen Maschine (18), umfassend eine Prozessoreinrichtung, die dazu eingerichtet ist, ein Verfahren nach einem der vorhergehenden Ansprüche durchzuführen.

9. Stromreglervorrichtung (10) nach Anspruch 8, wobei die Stromreglervorrichtung (10) ein Kompensationsfilter (40) umfasst, welches eine Übertragungsfunktion aufweist, die auf der Grundlage von Kettenleitern gebildet ist.

10. Stromreglervorrichtung (10) nach Anspruch 8 oder 9, wobei die Stromreglervorrichtung (10) ein Kompensationsfilter (40) umfasst, welches eine Übertragungsfunktion aufweist, die in Abhängigkeit von einer Wirbelstromeffekte modellierenden Induktivität der elektrischen Maschine (18) gebildet ist.

11. Stromreglervorrichtung (10) nach einem der Ansprüche 8 bis 10, wobei die Stromreglervorrichtung (10) ein Kompensationsfilter (40) umfasst, welches eine Übertragungsfunktion aufweist, welche durch Invertieren einer solchen Übertragungsfunktion gebildet ist, wie sie eine Parallelschaltung (80) aus einer Induktivität und einem ohmschen Widerstand aufweist.

12. Stromreglervorrichtung (10) nach einem der Ansprüche 8 bis 11, wobei die Schätzeinrichtung (30) ein Modell (68) umfasst, welches ein elektrisches Verhalten der elektrischen Maschine (18) und einer elektrischen Leistungsversorgung der elektrischen Maschine (18) nachbildet und welches bevorzugt zumindest eine Kennlinie und/oder ein mathematisches Modell umfasst.

13. Computerprogrammprodukt umfassend zumindest ein Speichermedium, wobei auf dem zumindest einen Speichermedium ein Programm gespeichert ist, welches dazu eingerichtet ist, bei Ausführung durch eine vorbestimmte Prozessoreinrichtung die Durchführung eines Verfahrens nach einem der Ansprüche 1 bis 7 zu bewirken.

**Claims**

1. Method for the regulation of a current in an electrical machine (18) by means of a current regulator (10), wherein

   - a target value (14) for the current is received from the current regulator (10) at a target value input (12) and
   - a pilot signal (28, 38) for the target value (14) is generated by a pilot control device (26),

   **characterised in that**

   - through the filtering of the pilot signal (28, 38) by means of a compensation filter (40), which maps an inverse eddy current effect and skin effect of the electrical machine (18), a first actuating signal for a control variable of the electrical machine (18) is generated at a command output (16),
   - by means of the pilot control device (26) the pilot signal (28, 38) is generated from the difference (36) between the target value (14) and an actual value (32) of the current flowing in the electrical machine (18) estimated by an estimation device (30) and
   - by means of a regulator device (50) of the current regulator (10) a control signal (52) is generated as a second actuating signal at the command output (16) and the estimated actual value (32) is hereby fed to the regulator device (50) at a regulator target value input as a control target value (56).

2. Method according to claim 1, wherein by means of the estimation device (30) the estimated actual value (32) is calculated, depending on a maximum electrical current which can be fed to the electrical machine (18) by a power supply.

3. Method according to claim 1 or 2, wherein the control target value (56) is fed to the regulator device (50) via a lag element (58) and the estimated actual value (32) is hereby delayed by a predetermined measuring time delay and/or a predetermined actuating time delay.

4. Method according to one of the preceding claims, wherein a moment-generating proportion of a coil current of the electrical machine (18) is regulated as the current and at least one q-component of a control voltage for a space vector of a field-oriented control is set as the control variable by the current regulator (10).

5. Method according to one of the preceding claims, wherein by means of a monitoring device (82), a check is performed as to whether the amount of a difference between a control voltage set via the command output (16) and a value for the control voltage which can currently actually be provided by the power supply of the electrical machine (18) is greater than a predetermined maximum value and in this case the target value (14) is provided without delay at a regulator target value input of a regulator device (50) of the current regulator (10) as a control target value (56).

6. Method according to one of the preceding claims, wherein a current-dependent inductance factor for an inductance of windings of the electrical machine is determined at least for the pilot control.

7. Method according to claim 6, wherein the current-dependent inductance factor is calculated based on a current value, which is pre-calculated by a predictor or by means of a model for an electrical behaviour of the electrical machine.

8. Current regulator device (10) for the regulation of a current of an electrical machine (18), comprising a processor device, which is set up to implement a method according to one of the preceding claims.

9. Current regulator device (10) according to claim 8, wherein the current regulator device (10) comprises a compensation filter (40), which has a transmission function which is formed on the basis of distributed-constant impulse generators.

10. Current regulator device (10) according to claim 8 or 9, wherein the current regulator device (10) comprises a compensation filter (40), which has a transmission function which is formed depending on an inductance of the electrical machine (18) which models eddy current effects.

**11.** Current regulator device (10) according to one of the claims 8 to 10, wherein the current regulator device (10) comprises a compensation filter (40), which has a transmission function which is formed through inversion of such a transmission function, having a parallel circuit (80) made up of an inductance and an ohmic resistance.

**12.** Current regulator device (10) according to one of the claims 8 to 11, wherein the estimation device (30) comprises a model (68), which maps an electrical behaviour of the electrical machine (18) and of an electrical power supply of the electrical machine (18) and which preferably comprises at least one characteristic curve and/or a mathematical model.

**13.** Computer program product comprising at least one storage medium, wherein a program is stored on the at least one storage medium, which is set up to initiate the implementation of a method according to one of the claims 1 to 7 upon its execution by a predetermined processor device.

**Revendications**

**1.** Procédé de régulation d'un courant dans une machine ( 18 ) électrique au moyen d'un régleur ( 10 ) de courant,

- en recevant du régleur ( 10 ) de courant à une entrée ( 12 ) de valeur de consigne une valeur ( 14 ) de consigne du courant, et
- en produisant, en rapport à la valeur ( 14 ) de consigne, un signal ( 28, 38 ) de pilotage par un dispositif ( 26 ) de pilotage,

**caractérisé en ce que**

- on produit en filtrant le signal ( 28, 38 ) de pilotage au moyen d'un filtre ( 40 ) de compensation, qui reproduit un effet inverse de courants de Foucault et d'effet Kelvin de la machine ( 18 ) électrique à une sortie ( 16 ) de réglage, un premier signal de réglage pour une grandeur de réglage de la machine ( 18 ) électrique,
- on produit par le dispositif ( 26 ) de pilotage le signal ( 28, 38 ) de pilotage à partir de la différence ( 36 ) entre la valeur ( 14 ) de consigne et une valeur ( 32 ) réelle estimée par un dispositif ( 30 ) d'estimation du courant passant dans la machine ( 18 ) électrique, et
- on produit par un dispositif ( 50 ) régleur du régleur ( 10 ) de courant un signal ( 52 ) de régulation sous la forme d'un deuxième signal de réglage à la sortie ( 16 ) de réglage et on envoie au dispositif ( 50 ) régleur comme valeur ( 56 ) de consigne de régulation la valeur ( 32 ) réelle estimée à une entrée de valeur de consigne du régleur.

**2.** Procédé suivant la revendication 1, dans lequel on calcule, par le dispositif ( 30 ) d'estimation, la valeur ( 32 ) réelle estimée en fonction d'une valeur d'une tension électrique pouvant être appliquée au plus à la machine ( 18 ) électrique par une alimentation de puissance.

**3.** Procédé suivant la revendication 1 ou 2, dans lequel on envoie au dispositif ( 50 ) régleur la valeur ( 56 ) de consigne de régleur par un élément ( 58 ) de temps mort et on retarde ainsi la valeur ( 32 ) réelle estimée d'un retard de temps de mesure déterminé à l'avance et/ou d'un retard de temps de réglage déterminé à l'avance.

**4.** Procédé suivant l'une des revendications précédentes, dans lequel on régule comme courant une partie se formant instantanément d'un courant de bobine de la machine ( 18 ) électrique et on règle comme grandeur de réglage par le régleur ( 10 ) de courant au moins une composante q d'une tension de commande pour un vecteur d'espace d'une régulation par champ.

**5.** Procédé suivant l'une des revendications précédentes, dans lequel on contrôle, par un dispositif ( 82 ) de contrôle, si une différence entre une tension de commande réglée par la sortie ( 16 ) de réglage et une valeur de la tension de commande pouvant être mise en disposition réellement instantanément par l'alimentation en puissance de la machine ( 18 ) électrique, est en valeur absolue, plus grande qu'une valeur la plus grande déterminée à l'avance et dans ce cas, on met à disposition comme valeur ( 56 ) de consigne de régleur, la valeur ( 14 ) de consigne sans délai sur une entrée de valeur de consigne de régleur d'un dispositif ( 50 ) régleur du régleur ( 10 ) de courant.

**6.** Procédé suivant l'une des revendications précédentes, dans lequel on détermine au moins pour le pilotage une valeur d'inductance qui dépend du courant pour une inductance d'enroulement de la machine électrique.

7. Procédé suivant la revendication 6, dans lequel on calcule la valeur d'inductance qui dépend du courant sur la base d'une valeur du courant qui est calculée à l'avance par un prédicteur ou au moyen d'un modèle d'un comportement électrique de la machine électrique.

8. Dispositif ( 10 ) formant régleur de courant pour la régulation d'un courant d'une machine ( 18 ) électrique comprenant un dispositif à processeur qui est conçu pour effectuer un procédé suivant l'une des revendications précédentes.

9. Dispositif ( 10 ) suivant la revendication 8, dans lequel le dispositif ( 10 ) formant régleur de courant comprend un filtre ( 40 ) de compensation, qui a une fonction de transfert formée sur la base de conducteurs itératifs.

10. Dispositif ( 10 ) suivant l'une des revendications 8 ou 9, dans lequel le dispositif ( 10 ) formant régleur de courant comprend un filtre ( 40 ) de compensation, qui a une fonction de transfert qui est formée en fonction d'une inductance de la machine ( 18 ) électrique modélisée par un effet de courants de Foucault.

11. Dispositif ( 10 ) suivant l'une des revendications 8 à 10, dans lequel le dispositif ( 10 ) formant régleur de courant comprend un filtre ( 40 ) de compensation, qui a une fonction de transfert qui est formée par inversion d'une fonction de transfert telle qu'elle a un circuit ( 80 ) parallèle composée d'une inductance et d'une résistance ohmique.

12. Dispositif ( 10 ) suivant l'une des revendications 8 à 11, dans lequel le dispositif ( 30 ) d'estimation comprend un modèle ( 68 ) qui reproduit un comportement électrique de la machine ( 18 ) électrique et une alimentation de puissance électrique de la machine ( 18 ) électrique et qui comprend de préférence au moins une courbe caractéristique et/ou un modèle mathématique.

13. Produit de programme d'ordinateur comprenant au moins un support de mémoire dans lequel, il est mémorisé sur le au moins un support de mémoire un programme conçu pour, lors de l'exécution par un dispositif à processeur déterminé à l'avance, provoquer la mise en oeuvre d'un procédé suivant l'une des revendications 1 à 7.

FIG 1

EP 2 626 998 B1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008007190 A1
- EP 0790701 A2
- DE 10336068 A1